(19) Europäisches Patentamt
European Patent Office
Office européen des brevets

(11) Publication number: 0 296 098
A2

(12) # EUROPEAN PATENT APPLICATION

(21) Application number: 88730138.0

(22) Date of filing: 14.06.88

(51) Int. Cl.[4]: C 09 D 3/72
C 08 G 18/08, C 08 G 18/66

(30) Priority: 16.06.87 US 62669

(43) Date of publication of application:
21.12.88 Bulletin 88/51

(84) Designated Contracting States:
AT BE CH DE ES FR GB GR IT LI LU NL SE

(71) Applicant: W.R. Grace & Co.-Conn. (a Connecticut corp.)
Grace Plaza 1114 Avenue of the Americas
New York New York 10036-7794 (US)

(72) Inventor: Wood, Louis Leonard
11760 Gainsborough Road
Rockville, MD 20854 (US)

Wszolek, Walter Robert
5161 Freter Road
Sykesville, MD 21784 (US)

Fulmer, Glenn Elton
11505 Crows Nest Road
Clarksville, MD 21029 (US)

Hannemann, Gerd Kurt
5667 Vintage Point
Columbia, MD 21044 (US)

Guthrie, James Leverette
1318 Patuxent Drive
Ashton, MD 20702 (US)

Hartwig, Richard Christian
12214 Valerie Lane
Laurel, MD 20708 (US)

(74) Representative: UEXKÜLL & STOLBERG Patentanwälte
Beselerstrasse 4
D-2000 Hamburg 52 (DE)

(54) **Crosslinked polyurethane emulsion, process and prepolymer for its production and process for forming coatings from said emulsion.**

(57) Stable crosslinked polyurethane aqueous emulsions capable of forming water-resistant plastic coatings without heating are prepared by

(1) forming in an inert solvent a branched prepolymer with at least 0.4% (0.095 meq/g) of free isocyanate from

(a) an alcohol having two or three hydroxyl groups,

(b) a hydrophobic polymeric diol or triol,

(c) a polyisocyanate, the amounts of (a), (b) and (c) being such that the equivalent ratio of total isocyanate to total hydroxyl is less than 1.4; and

(d) optionally a urethane-forming catalyst;

(2) admixing the reaction products from (1) supra with a fatty, tertiary amine additive with molecular weight of less than 1,000 in an amount up to 1% by weight of the prepolymer in (1) supra;

(3) adding the mixture from (2) with vigorous stirring to water acidified to pH 1.5 - 5.0 with an inorganic acid or a non-carboxylic organic acid that retains its acidic character up to 200° C, to form a crosslinked polyurethane emulsion; and

(4) removing the inert solvent and a portion of the water so that the emulsion contains 60 to 75% solids but less than 1% of residual acid.



Bundesdruckerei Berlin

Description

## CROSSLINKED POLYURETHANE EMULSION, PROCESS AND PREPOLYMER FOR ITS PRODUCTION AND PROCESS FOR FORMING COATINGS FROM SAID EMULSION

### BACKGROUND OF THE INVENTION

### 1. Field of the Invention

This invention relates to a process for forming a storage stable crosslinked polyurethane emulsion and formulations therefrom. As used herein, the term "storage stable" means that the emulsion is stable without coagulation of the particles for at least three months at ambient temperature. More particularly, this invention relates to a crosslinked polyurethane emulsion of high solids content which can be formulated into products usable in the coatings field.

### 2. Description of the Prior Art

U.S. 3,948,837 teaches making an all aliphatic-NCO capped prepolymer, partially chain-extending same with small molecules like ethylene glycol or ethylene diamine, chemically bonding an anionic emulsifier to the partially extended prepolymer in an aqueous bath which completes the chain-extension step using the $H_2O$/-NCO reaction.

U.S. 4,183,836 teaches making an anionic urethane dispersion from an aliphatic isocyanate wherein the emulsifier is chemically bound to the polymer.

U.S. 3,388,087 teaches an aqueous dispersion of a quarternized polyurethane composition prepared from a linear prepolymer.

U.S. 4,192,937 teaches a process for the preparation of substantially linear isocyanate poly-addition products having side-chain hydroxyl groups by the reaction of reactive systems which contain free isocyanate groups and oxazolidine groups with water.

U.S. 3,988,278 teaches a latex formed from a prepolymer formed by reacting an aromatic polyisocyanate with a polyol and, thereafter, modifying the thus formed prepolymer with hydrophilic, monofunctional reactants, e.g., diethylethanolamine on chains pendant from the polymer backbone. The prepolymers are then chain-extended in water to create latices of self-emulsified solid water insoluble polyurethane particles.

U.S. 3,479,310 teaches a polyurethane ester which is prepared by dispersing in water a polyurethane containing from 0.02 to about 1% by weight salt groups. The polyurethane can be dispersed without the aid of additional emulsifying agent.

U.S. 4,331,717 teaches making a linear isocyanate endcapped polyurethane oligomer containing internal tertiary amine groups, chain extending with hydrazine or diamines to high molecular weight and then dispersing this linear, -NCO free polyurethane-urea polymer in water containing organic acids which lose their acid character upon heating. Consumption of all isocyanate before contact with water precludes any chance that emulsion-stabilizing amine salts can be generated during emulsification by hydrolysis of isocyanate. Therefore, in order to stabilize these emulsions, a large amount of acid is used, averaging about 22% of the emulsion solids, and the acid therefore must be capable of losing its acidic character by heating if the coatings are to be hydrophobic. Loss of acid character occurs through elimination of carbon dioxide or through intramolecular ring formation which, according to the examples, requires a temperature of 110-140°C. In the absence of such heating, conversion to hydrophobic plastic coatings apparently is insufficient to produce coatings with resistance to wet abrasion. This obviates their usefulness in the presence of fixed acids such as phosphoric acid, thus requiring the use of special acidic structures that decompose upon heating. In comparison examples intended to demonstrate the inferiority of a fixed acid, coatings containing phosphoric acid withstood only an average of about 28% of the number of wet rubs on a Satra machine as coatings that contained materials that had lost their acidic character through heating. The amount of phosphoric acid required for stabilization averaged 8% by weight of the final coating, causing it to be sensitive to wet abrasion. Even when the special heat-sensitive acids were used, the claimed solids content was no more than 50% and, according to the examples, was no more than 38% solids using the acidic compositions of the invention and only 20-27% solids in the examples using phosphoric acid.

GB 2,147,910 teaches making a crosslinked polyurethane aqueous emulsion having a high solids content (50-70%) that dries to a corrosion-inhibiting hydrophobic coating having abrasion resistance. A branched prepolymer with amine groups in the backbone and having terminal isocyanate groups is admixed with an amine-containing surfactant which on neutralization becomes a cationic emulsifier. The admixture is emulsified, chain-extended and crosslinked by being added to water containing a fixed acid. The coatings can be air-dried to evaporate the water, but preferably are dried at temperatures ranging from 75-150°C for 5-60 minutes. However, in preparation for testing for wet abrasion resistance, they are preferably cured at 150°C for

30 minutes so that they will withstand shot blasting for at least 200 seconds. If the coatings are air-dried only but not heat cured, they survive only about one second or less of shot blasting in the wet condition. It appears that the poor wet abrasion resistance of these coatings in the absence of heat curing is due in part to the high emulsifier content of the coatings; that is, about 3% by weight of the coatings after they have dried, thus permitting easy penetration of water into the coatings. Heating of the dried coatings to 150° C for 30 minutes apparently causes better and more permanent coalescence of the polymer particles with each other and perhaps causing the emulsifier to be squeezed from between the polymer particles to the surface of the coating where it may be washed away. Another effect of the heat curing apparently is to soften the coatings which may be hard because of the relatively high crosslink density and relatively high content of urea groups that result from using an isocyanate-terminated prepolymer with a molecular weight of only 1,500-8,000, thus allowing the softened coating to come into better contact with the substrate and to adhere more tightly.

U.S. 4,554,308 teaches making stable aqueous dispersions of crosslinked polyurethane particles which contain ionically neutralizable solubilizing groups. These may coalesce upon drying to continuous films, but the presence of solubilizing groups limits their usefulness in the wet state.

## OBJECTS OF THE INVENTION

One object of the invention is to prepare a hydrophobic, crosslinked polyurethane aqueous emulsion. Another object of the invention is to prepare a hydrophobic, crosslinked polyurethane aqueous emulsion having a high (60 - 75%) solids content that can be dried to a continuous film rapidly at ambient temperature. Still another object of the invention is to produce a stable, hydrophobic, crosslinked polyurethane aqueous emulsion which results in a coating on drying that has good abrasion resistance and that retains abrasion resistance after prolonged exposure to water. A further object of the invention is to produce a crosslinked polyurethane aqueous emulsion that is storage stable without coagulation of the particles for at least three months at ambient temperature. Another object of this invention is to produce an aqueous emulsion having less than one percent by weight of an acidic material. Still another object of the invention is to produce an aqueous emulsion of crosslinked polyurethane particles having an average particle size in the range of about 1 - 5 microns in diameter. Yet another object of the invention is to prepare a hydrophobic, crosslinked polyurethane aqueous emulsion that will result in a corrosion-inhibiting coating on drying, either by itself or in combination with a primary corrosion-inhibiting coating that may be too brittle to survive impact without a secondary protective urethane topcoat.

## DESCRIPTION OF THE INVENTION

Briefly, this invention involves forming a branched prepolymer having terminal isocyanate groups. As used herein, the term "branched" means a prepolymer containing an average of more than about 2.5, preferably 2.8-3, al isocyanate groups per chain. These prepolymers are admixed with a fatty, amine-containing substance which on acidification becomes a cationic emulsifier, then emulsified, chain-extended and crosslinked by adding the prepolymer to acidified water. By "fatty amine" as used herein is meant an amine having at least one chain containing between 8 and 22 carbon atoms.

The invention has, as an important advantage over the prior art, the ability to form urethane films at ambient temperature that are resistant to water and which therefore retain a high degree of abrasion resistance under repeated impact of projectiles such as gravel, steel shot and the like, even after the film has been exposed to or immersed in water for extended periods of time. In contrast, coatings of the prior art must be heat cured in order to develop wet abrasion resistance. To obtain the desired degree of water resistance, it is critical that the polymer be substantially free of solubilizing groups, that it be crosslinked, that the average size of the urethane particles be at least about one micrometer in diameter so that a minimum of emulsifier may be used, and that there be only a small amount of acid present in the dried coating. In contrast to prior art, such as U.S. 4,331,717, which uses large amounts of weak organic acids at concentrations of about 3-40% of the weight of the polymer solids, the present invention uses no more than 1% of a strong, fixed inorganic or noncarboxylic acid such as phosphoric or methanesulfonic acid, causing the emulsion pH to be 3 or lower in order to retain emulsion stability without leaving large amounts of hydrophilic acid residues in the coatings. These fixed inorganic or noncarboxylic acids retain their acid character even if heated as high as 200° C. The use of relatively small amounts of a strong fixed acid allows concentration of the emulsions to more than 60% solids, whereas emulsions of prior art that user large amounts of heat-sensitive acids cannot, as shown in the examples, be concentrated beyond a solids content of about 38%.

To ensure that the urethane be sufficiently hydrophobic, it is desirable not only that the polymeric diol or triol be hydrophobic but that the alcohol having two or three OH groups should not contribute to water sensitivity of the crosslinked urethane. As used herein, the term "hydrophobic polymeric diol or triol" means a material which on admixture with water separates into two phases. The alcohol having two or three OH groups optionally may be free of ionizable groups, such as trimethylolpropane, trimethylolethane, glycerol, ethylene

glycol, 1,4-butanediol and the like. Although these alcohols may be water-soluble by virtue of their hydroxyl groups before incorporation into the polyurethane product, they do not contribute any hydrophilic character to the polymer after incorporation, because they no longer contain hydrophilic groups. Alternatively, it is possible to use an amine-containing alcohol such as triethanolamine or N-methyldiethanolamine if it is substantially prevented from being ionized by imbedding it in a hydrophobic, crosslinked urethane polymer matrix in which each amino group is shielded by hydrophobic, isocyanate-terminated prepolymer of about 4,000 to about 15,000 units of molecular weight.

To further improve water resistance, it is desirable to use as little emulsifier as possible. This is accomplished by minimizing the surface area of the crosslinked urethane particles that must be coated with emulsifier to prevent coalescence of the particles during storage. This, in turn, is accomplished by keeping the particles in the range of about 1 - 5 microns in diameter. The practice of this invention allows the average particle size to be in the range of 1 - 5 microns whereas the average particle size of emulsions of the prior art, for example U.S. 4,554,308, must be below one micron in order to be stable.

A further advantage of having particles with an average diameter of more than one micron is that a smaller amount of permanently-acidic material may be used to protonate the tertiary amine additive in order to convert it into a cationic emulsifier. In the present invention, the amount of acid in a concentrated emulsion is typically in the range of 0.3-0.8% of the weight of the polymer solids, thus minimizing the amount of water soluble material that is detrimental to water resistance of the coating. In the prior art of U.S. 4,331,717 the amount of organic acid averages about 22% of the weight of the polymer. Even in the four examples of U.S. 4,331,717 in which phosphoric acid was used, the average amount was 8% by weight of the emulsion solids, varying from 2.8% to 14% and causing the average number of rubs withstood in the Satra machine to be, on the average, only 28% as many as were withstood by the same coatings emulsified with acids that had lost their acidic character through heating to at least 110°C.

Yet another advantage of having particles with an average diameter of more than one micron is that it is possible to concentrate the emulsions to a solids content of more than 60% without the disadvantage of excessive viscosity. In recent years, those skilled in the coatings art have been seeking diligently to find means to achieve coatings having very high concentrations of polymer solids therein. In the practice of this invention, it is surprisingly not uncommon to prepare emulsions with 70% solids which have viscosity values of no more than 6 poise and which therefore can be compounded into a sprayable composition. Further, polymer solids contents as high as 74 - 75% are readily achieved. By comparison, the emulsions of the prior art, having average particle size of less than one micron, cannot be concentrated to more than about 30% to 60% solids without obtaining highly viscous pastes that cannot be sprayed. U.S. 4,331,717, for example, states that the dispersions or solutions of their invention always have solids contents of less than about 60% by weight and preferably between about 15 and 50% by weight. Furthermore, in examples in which an inorganic acid was used, emulsions were concentrated only to 20-27% solids. U.S. 4,554,308 discloses an upper limit . operable solids concentration of 10 - 50% by weight. It is well known in emulsion technology that, as particle size decreases, less solid material is required to attain a given viscosity. It is also well known that, as particle size decreases, more emulsifier is required to maintain stability, and that dried coatings prepared from emulsions with high levels of emulsifier tend to be water-sensitive and thus to lose their strength when wet. An important advantage of high solids content as attained in the present invention, especially in the range of 65 - 75% solids, is the ability of the sprayed emulsions to dry at ambient temperature into a coating within a short time after application to a surface. The rapid consolidation of the crosslinked particles in the applied emulsion occurs because it is necessary to evaporate only a small amount of water before the particles can come into contact with one another to begin the process of coalescence into a continuous film. It is common in the prior art, for example, as taught in U.S. 4,331,717, to require heating to 110-140°C in order to obtain a water-resistant plastic coating. Another advantage is that it is less costly to ship a concentrated emulsion than a less concentrated emulsion because of a smaller amount of water must be transported per weight of useful urethane.

It is within the scope of this invention to use a single polyisocyanate monomer material or a mixture of different isocyanates such as a mixture of an aromatic isocyanate with an aliphatic isocyanate. It is preferred to use a mixture of aromatic isocyanate and aliphatic isocyanate in such a manner that the alcohol, the hydrophobic polymeric diol or triol and the polyisocyanate are admixed in a mole ratio in the range of about 1:4-15:7-18, respectively. Due to the unlike reaction rates of the two isocyanates, the preponderant idealized molecular structure will have the aliphatic isocyanate in the terminal position. Due to the differing reaction rates of the two isocyanates, it is not necessary to build up the isocyanate-terminated prepolymer in a stepwise manner as in the prior art. For example, in practicing one embodiment of the invention, the prepolymer is prepared by charging six moles of an aromatic isocyanate, e.g., toluene diisocyanate (TDI), three moles of an aliphatic or cycloaliphatic isocyanate, e.g., isophorone diisocyanate (IPDI), six moles of a hydrophobic polyol, e.g., polypropylene glycol (PPG) and one mole of an alcohol having 3 -OH groups, e.g., triethanolamine (TEA), to a stirred container and letting the reaction continue for about 1 to 12 hours. During the reaction an exotherm up to about 45°C occurs. To force the reaction to completion, a urethane forming catalyst, e.g., dibutyltindilaurate (DBTDL) is usually added to the system. Due to the reaction rates, the following reactions are believed to occur sequentially:

(1) Triethanolamine reacts with the aromatic isocyanate.

(2) The polypropylene glycol reacts with a substantial portion of the aromatic isocyanate.

(3) The aliphatic isocyanate reacts with the remaining -OH groups of the polypropylene glycol.

The reactions are carried out in an inert solvent such as methyl ethyl ketone, methyl isobutyl ketone, acetone, toluene or dioxane.

As a result of the reaction rates, a prepolymer having the following idealized structure is obtained:

```
IPDI-PPG-TDI-PPG-TDI-TEA-TDI-PPG-TDI-PPG-IPDI
                     |
                    TDI
                     |
                    PPG
                     |
                    TDI
                     |
                    PPG
                     |
                    IPDI
```

In another embodiment the prepolymer is prepared by charging nine moles of an aromatic isocyanate, e.g., toluene diisocyanate (TDI), three moles of an aliphatic or cycloaliphatic isocyanate, e.g., isophorone diisocyanate (IPDI), nine moles of a hydrophobic polyol, e.g., polypropylene glycol (PPG) and one mole of an alcohol having three -OH groups, e.g., trimethylolpropane (TMP) to a stirred reactor, and let the reaction continue for about 1 to 12 hours during which time an exotherm up to about 45° C occurs. Due to the reaction rates, a preponderance of a prepolymer having the following idealized structure is obtained:

```
IDPI-PPG-(TDI-PPG)2-TDI-TMP-TDI-(PPG-TDI)2-PPG-IPDI
                         |
                        TDI
                         |
                       (PPG
                         |
                        TDI)2
                         |
                        PPG
                         |
                        IPDI
```

For certain applications where somewhat different properties are required, an alternate route for preparing the high molecular weight prepolymers of this invention may be used. That is, the prepolymer can be prepared from an alcohol having only two hydroxyl groups, e.g., 1,4-butanediol or N-methyl diethanolamine (NMDEA), or from blends (mixtures) of such dihydroxy compounds with various trihydroxy compounds including trihydroxy compounds, e.g., triethanolamine as described above.

In general the mole ratio of the alcohol having two or three hydroxyl groups, the hydrophobic polymeric diol or triol and the polyisocyanate is 1:4-15:7-18, a preferred range being 1:6-9:9-12. As demonstrated by the Examples (see below) a ratio of about 1:6:9 is very useful.

For attainment of best physical properties (tensile strength, resiliency, abrasion resistance, solvent resistance, heat distortion resistance, outdoor weathering resistance and the like), it is critical that the prepolymers of the present invention be branched rather than linear in structure. Branched prepolymers, i.e., those containing more than 2, preferably about 2.5 - 3 terminal isocyanate groups, on subsequent chain extension and crosslinking during emulsification will lead to the formation of crosslinked, elastomeric

polyurethane products having a balance of the desirable physical properties outlined above. In the first two examples, above, the branching units were furnished by the trihydroxy compounds, triethanolamine (TEA) or trimethylolpropane (TMP), whereas when using an alcohol having only two hydroxyl groups the branching units have to be furnished by the other components like polymethylene polyphenylisocyanate having an average-NCO functionality of 2.3 and commonly referred to as polymeric MDI (PMDI). When NMDEA is used together with TDI or pure (non-polymeric) MDI, branching units may be supplied in various ways such as by incorporating into the starting composition small amounts of other polyfunctional reactive co-monomers such as TEA, glycerol, trimethylolpropane, toluene-2,4,6-triisocyanate, polymeric MDI and the like.

It is critical in the instant invention that, when forming the prepolymer, the equivalent ratio of the isocyanate to total hydroxyl groups in the alcohol and hydrophobic diol or triol be less than 1.4. Such a ratio affords a sufficiently low crosslink density in the emulsified polyurethane particle so as to result in a sufficiently soft coating that does not require heating in order to form a good bond with the substrate even at ambient conditions. This results in good abrasion resistance. Higher NCO to OH ratios result in higher crosslinked densities requiring a heating step for good bonding and thus good abrasion resistance.

The thus formed prepolymers are then usually admixed with a fatty amine-containing surfactant, e.g., N,N-dimethyloctadecylamine. The fatty amine-containing surfactants used herein upon acidification become cationic emulsifiers. The thus emulsifier-containing prepolymers are then added with stirring to an equal weight (ordinarily, but not limiting) of acidified water (pH = 1.5 - 5.0), e.g., phosphoric acid in an amount that is about 0.1% - 1.0% but preferably about 0.3% - 0.8% by weight of the prepolymer to be emulsified, sufficient to bring the pH of the product emulsion to about 2-5 pH units after protonation of all basic functional groups in the polymer and in the emulsifier. During emulsification, the isocyanate groups react with the acidified water to form an equilibrium mixture of primary amines and their salts in a ratio determined to a large extent by the pH. The free amine groups react with unhydrolyzed isocyanate functions to cause chain extension through urea linkages while the amine salts, in contrast to the prior art, contribute to the emulsifiability of the urethane polymer. The reaction is continued for about 1 to 12 hours with vigorous foaming ($CO_2$ evolution) taking place. The thus formed hydrophobic, crosslinked polyurethane aqueous emulsions contain roughly about 20 - 25% solids.The emulsions may be concentrated to approximately 60 - 75% solids by exposing them to a vacuum evaporator at temperatures ranging from about 20 to 50°C or a centrifuge or microfiltration or ultrafiltration membrane apparatus.

The polyisocyanates used to form the emulsions of the instant invention can be mixtures of aromatic and aliphatic isocyanates or either aromatic or aliphatic isocyanates per se. Operable aromatic isocyanates include, but are not limited to, tolylene diisocyanate, triphenylmethane-4,4′,4″-triisocyanate, benzene-1,3,5-triisocyanate, diphenyl-2,4,4′-triisocyanate, xylene diisocyanate, chlorophenylene diisocyanate, diphenylmethane-4,4′-diisocyanate, naphthalene-1,5-diisocyanate, xylene-alpha, 3,3′-dimethyl-4,4′-biphenylene diisocyanate, 3,3′-dimethoxy-4,4′-biphenylene diisocyanate, 2,2′,5,5′-tetramethyl-4,4′-biphenylene diisocyanate, 4,4′-methylene bis(phenyl-isocyanate), 4,4′-sulfonyl bis(phenylisocyanate) and 4,4′-methylene diorthotolylisocyanate.

As used herein, the term "aliphatic polyisocyanate" not only includes conventional aliphatic and cycloaliphatic isocyanates such as isophorone diisocyanate, hexamethylene diisocyanate and methylene dicyclohexyl diisocyanate, but also includes all isocyanate structures in which the NCO group is not directly attached to an aromatic ring. Thus, the term includes cycloaliphatic diisocyanates such as isophorone diisocyanate (IPDI), and it also includes structures such as:

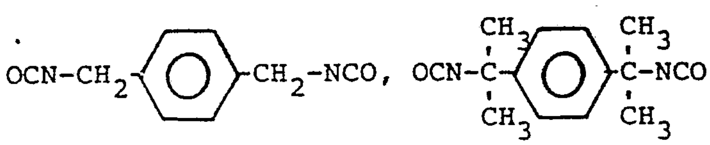

and the like. Other operable aliphatic isocyanates include, but are not limited to, ethylene diisocyanate, trimethylene diisocyanate, diicyclohexyl methane-4,4′-diisocyanate, isophorone diisocyanate, 1,6-hexamethylene diisocyanate and 2,2,4-trimethyl-1,6-hexane diisocyanate.

The aromatic and aliphatic diisocyanates are added in approximately equal molar amounts in the preferred embodiment, but may be varied from this ratio to improve properties or achieve lower costs, taking precautions to maintain a sufficient concentration of aliphatic and/or aromatic isocyanate groups required to permit the formation of stable emulsions.

In one method of practicing the invention, the alcohol contains no potentially solubilizing groups. Examples of such alcohols are ethylene glycol, propylene glycol, diethylene glycol, dipropylene glycol, trimethylolpropane, trimethylolethane and glycerol.

In another method of practicing the invention, surprisingly, tertiary amine-containing alcohols may be used as the alcohol because, when embedded in a crosslinked polymer matrix, they do not introduce a solubilizing group of sufficient importance to affect wet abrasion resistance. However, during the synthesis of the isocyanate-terminated prepolymer, the tertiary amine-containing alcohols may serve as catalysts for the urethane-forming reactions, thus reducing the amount of auxiliary catalyst, such as dibutyltindilaurate, that

must be used if it is desired to complete the urethane-forming reactions within a given length of time.

Tertiary amine alcohols operable herein to form the prepolymer include, but are not limited to, N-alkylated diethanolamines, N-arylated diethanolamines and N-alkarylated diethanolamines of the formula:

$$HOCH_2CH_2-\overset{R}{N}-CH_2CH_2OH;$$

N-alkylated dipropanolamines, N-arylated dipropanolamines and N-alkarylated dipropanolamines of the formula:

$$HOCH_2CH_2CH_2-\overset{R}{N}-CH_2CH_2CH_2-OH$$

wherein said formulas R = alkyl having 1-18 carbon atoms or alkyl substituted or unsubstituted phenyl or benzyl;
tripropanolamine, i.e., $N-(CH_2CH_2CH_2-OH)_3$;
N,N-bis(2-hydroxyethyl)-piperazine, i.e.,
$HOCH_2CH_2-$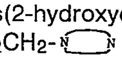$-CH_2CH_2OH$;
1-[N,N-bis(2-hydroxyethyl)amino]-2-propanol, i.e.,
$CH_3\underset{OH}{CH}-CH_2-N-(CH_2CH_2OH)_2$; and the like.

In practicing the invention, non-carboxylic or inorganic acid is used to form the salt of the surfactant. The resulting surfactant is stable in the aqueous environment. Acids that maintain their acid character in the range 20 to 200°C are employed to give a pH in the range of about 1.5 to 5.0 to the water. Preferably, acids having only one ionizable hydrogen ion having a disassociation constant (pH) lower than about 4 and which are not corrosive to the substrate on which the coating is applied are used herein. obviously, corrosion would not be a factor in selecting the acid if the substrate, e.g., metal, has already been precoated with a non-corrosive coating. The preferred acids employed herein are phosphoric acid and methanesulfonic acid.

It is within the scope of this invention to use non-ionic surfactants or combinations of non-ionic and cationic surfactants to prepare the emulsions. Portions of these surfactants may be added prior to emulsification or in a post treatment step after the initial emulsion has been prepared in order to further stabilize the emulsion against premature coagulation, settling or gelation during production, shipment and storage or to impart improved properties.

The products of this invention are intended for use in making corrosion-inhibiting coatings having abrasion resistance even when wet. Thus, it is critical in achieving these objectives that the coatings be substantially hydrophobic and relatively impermeable to moisture. Because the major backbone elements of the prepolymer structure are comprised of high molecular weight polymeric polyols, these polyols are chosen to be hydrophobic. By virtue of ready availability and low cost, the polyalkylene ether diols and triols are the preferred polymeric polyols of this invention. It is well known in the art, however, that polyethylene glycols are water soluble and hydrophilic, and are therefore to be avoided for the purposes of this invention, as are copolymers of ethylene oxide with higher alkylene oxides wherein the ethylene oxide content is greater than about 40 mole percent. Thus, it is important that the admixtures of polymeric polyols used to make the prepolymer be sufficiently hydrophobic as to be immiscible, i.e., forms two layers, when mixed with an equal volume of water. Hydrophobic polyols operable herein to form the prepolymer include, but are not limited to, polyalkylene-ether diols and triols, especially polypropylene glycols, polybutylene glycols and polytetramethylene ether glycols of M.W. 400 - 4,000; poly(caprolactone) diols and triols of M.W. 500 - 3,000; hydroxy-terminated poly(ethylene adipate) of M.W. 500 - 3,000; hydroxy-terminated poly(1,4-butylene adipate) of M.W. 500 - 3,000; poly(butadiene) diol of M.W. 500 - 3,000 and the like.

The hydrophobic polyurethane emulsions of the instant invention can be used per se or may be formulated with conventional additives to form abrasion-resistant, anticorrosive coatings. Such coatings can be used on various substrates including metals, wood, glass, concrete, plastic, fabric, fiber, paper and the like including surfaces previously coated or painted with other classes of coating materials. One field in which the coatings are especially useful is in the automotive industry. Therein the formulated aqueous emulsion can be used as underbody coatings, chip-resistant coatings, rocker panel coatings, wheel well coatings and for wash-resistant replacements for cavity conservation waxes. The products of the present invention are durable, wear-resistant, corrosion protective and do not contain massive amounts of solvent that may contribute to air pollution during application in the factory environment.

In formulating the coatings, conventional additives such as thinners, thixotropic agents, antioxidants, antiblistering agents, pigments or dyes, anti-UV agents, anticorrosion additives and possibly extending "fillers" (inorganic powders, oils, resins), reinforcing agents (fibers, platelets, crosslinkers, latexes),

thickeners, plasticizers and the like can be added to the emulsion.

The additives are each added in amounts ranging from about 0.01 to 25% by weight of the aqueous emulsion. The additives can be added prior to emulsification, but, preferably, are added after the emulsion is formed by adding each additive subsequently in an appropirate order with stirring for about 1 to 30 minutes or more. In many instances it is preferred to admix the additives with small amounts of water to form a paste or masterbatch prior to adding it to the system.

The following examples will explain, but expressly not limit, the instant invention. unless otherwise noted, all parts and percentages are by weight.

In all examples herein practicing the instant invention, the crosslinked polyurethane particles in the aqueous emulsion have an average particle size in the range 1-5 microns in diameter.

## Example 1

### Prepolymer Preparation

To a stirred, 3-necked, round bottom, 5-liter flask are charged 1,998.86 g methyl ethyl ketone, 252.58 g toluene diisocyanate (80-20 by weight mixture of 2,4-/2,6-isomers), 153.2 g of isophorone diisocyanate, 36.36 g of triethanolamine and 1,556.72 g of polypropylene glycol having a molecular weight of about 1,025. The reactants are stirred for about 3 hours at which time the exotherm (up to 40°C) begins to subside. 1.8 g of dibutyltindilaurate are added to the reaction to force the reaction to completion. Th final NCO content was 0.13 meq/g (theoretical NCO is 0.22 meq/g).

## Example 2

### Emulsion Preparation

Into a 1 gallon Waring Blendor are charged 600 g demineralized water containing 4.67 g of phosphoric acid (85%). The acidified water had a pH of 2.22.

Into another container are combined 600 g of the reaction mixture from Example 1 along with 1.2 g of an emulsifier, i.e., N,N-dimethyloctadecylamine, commercially available from Armak under the tradename "Armeen DM-18D". The admixture was stirred for about 5 minutes to obtain a homogeneous admixture. The thus emulsifier-containing prepolymer solution was then charged to the phosphoric acid containing water with high speed stirring, and the reaction was continued for about 7 minutes. The emulsifier on neutralization by the opposing counter ion (e.g., phosphoric acid) becomes a cationic surfactant. During the reaction copious foaming ($CO_2$) evolution) took place which subsided considerably after about 1 hour. The resultant emulsion was about 25% solids.

## Example 3

### Emulsion Concentration

The resultant emulsion from Example 2 was concentrated using a Buechi Rotavapor R connected to house vacuum and heated occasionally (usually less than 35°C) using a water bath. in this manner about 4 hours were required to strip enough liquid to produce an emulsion with a solids content of about 65 wt.%.

## Example 4

### Abrasion Testing

The resultant concentrated emulsion from Example 3 was drawn down on a 3" x 6" steel panel electrocoated with a composition, commercially available from PPG under the tradename "ED-3076". Coatings were dried under ambient conditions overnight to thicknesses in the range of 0.007" - 0.015". The dried panels were then tested for abrasion resistance in both the dry and wet state on a Shot Blaster manufactured by Auer,

Mannheim, West Germany (Model Strahlanlage-ST800A).

The Shot Blaster abrasion test is the same for both the dry and wet panels. The test consists of shot blasting the urethane polymer coated panel with a crushed spherical cast steel shot type GP-14 Wheelabrator-Allevard at an air pressure of 70 psi at an angle of 60° until full penetration of the coating to expose bare steel is visibly noted. for dry samples a blasting period in excess of 300 seconds is considered acceptable. for wet samples a blasting period greater than 200 seconds is acceptable. panels coated with the product of Example 3 that were 0.0010" thick withstood shot blasting in the dry state for 300-500 seconds before any bare metal was exposed, and those that were 0.015" thick lasted about 1000 seconds. Panels tested in the wet state were soaked in demineralized water for 16 hours prior to testing. They were exposed to shot blasting immediately after removal from water. Those near 0.010" in thickness resisted shot blasting for about 200-300 seconds, and those near 0.015" in thickness resisted shot blasting for about 500 seconds.

The following example shows the necessity of heat curing the low molecular weight emulsion of the prior art in order to obtain good wet abrasion resistance.

## Example 5

### Preparation and Evaluation of Coating According to GB 2,147,910 - Examples 1-3

To a stirred, 3-necked, round bottom, 50-liter flask are charged 11,100 g methyl ethyl ketone, 1,448.5 g toluene diisocyanate (80-20 by weight mixture of 2,4-/2,6-isomers), 1,848.1 of isophorone diisocyanate, 413.1 g of triethanolamine and 8.533.1 g of polypropylene glycol having a molecular weight of about 1,025. The reactants are stirred for about 3 hours at which time the exotherm (up to 40°C) begins to subside. 11.1 g of dibutyltindilaurate is added to the reaction to force the reaction to completion. The final NCO content was 0.24 meq/g (theoretical NCO is 0.36 meq/g).

Into a 30-gallon open drum equipped with 4 equally spaced vertical baffles are charged 23,292 g demineralized water containing 321.4 g of phosphoric acid (85%), pH = 2.23.

Into another container are combined 23,292 g of the reaction mixture from the above preparation along with 132.7 g of an emulsifier, i.e., N,N-dimethyloctadecylamine, commercially available from Armak under the tradename "Armeen DM-18D". The admixture was stirred for about 5 minutes to obtain a homogeneous admixture. The thus emulsified-containing prepolymer solution was then charged to the phosphoric acid containing water with high speed stirring, and the reaction was continued for about 1 hour. The emulsifier on neutralization by the opposing counter ion (e.g., phosphoric acid) becomes a cationic surfactant. During the reaction copious foaming ($CO_2$ evolution) took place which subsided considerably after about 1 hour. The resultant emulsion was about 25% solids.

The resultant emulsion was passed 3 times through a Kontro thin film evaporator, Model No. R-55-3H-1, under the following operational conditions:

Impeller speed - 650 rpm;
Clearance - middle setting;
Throughput - first pass: 120 - 140 g/min.;
  second pass: 160 - 180 g/min.;
  third pass : 200 - 300 g/min.;
Water jacket temperature - 45 - 50°C;
Condenser coolant - 5°C;
Vacuum - less than 29 in. Hg.

The resultant emulsion was concentrated to a 60% non-volatiles content, coated onto panels, dried overnight under ambient conditions, and subjected to the shot-blasting test for abrasion resistance, both in the dry state and in the wet state as described in Example 4. The panels in the dry state resisted shot blasting for about 300 - 1,000 seconds but panels in the wet state failed, causing exposure of bare metal within one second, even when the thickness of the coating was 0.015". However, when coated panels were heated at about 150°C for 30 minutes and then subjected to the test for abrasion resistance in the wet state, they withstood shot blasting for periods of time in the range of 200-500 seconds. This shows that the low molecular weight products of GB 2,147,910 do not give coatings with good wet abrasion resistance when they are dried at ambient temperature although they are capable of giving excellent wet abrasion resistance after they have been heat cured.

## Example 6

Preparation and Evaluation of Coating According to U.S. 4,331,717 - Example 4

To a 1-liter, 3-necked round-bottom flask equipped with a stirrer, condenser and thermometer, add 140 g of propylene glycol-started polypropylene oxide (PPG-1025, Union Carbide), 44.0 g of phthalic acid/adipic acid/ethylene glycol polyester (hydroxyl no. 61.7) and 131.0 g of phthalic acid/ethylene glycol polyester (hydroxyl no. 63.4). vacuum pump is attached, and the flask is heated to 110° C while stirring under vacuum for 30 minutes. The temperature was allowed to drop to 90° C, stabilized at 90° C, and 47.0 g hexamethylene diisocyanate and 45.9 toluene diisocyanate (65%, 2,4 and 35%, 2,6 isomers) were added to the melt. The melt is stirred at 90° C (about 1 hour), and the isocyanate is checked until reaching a value of about 6.2% (1.48 meq/g by di-N-butylamine titration method). cool to 50° C, add 79 g acetone and stir until homogeneous. Add 26.8 g N-methyl diethanolamine, stir until isocyanate content is about 1.04% (0.25 meq/g by titration method). Add 111.0 g acetone, 1.6 g hydrazine hydrate and 5.2 g isophorone diamine. The reaction was continued until the isocyanate content is 0.0 (overnight) and the solids content of the prepolymer solution was 71.1%.

Emulsification

To a Waring Blendor (household type) add 265 g deionized water and 4.12 g, 85% phosphoric acid. With the motor speed on high, pour in 100 g of prepolymer solution. Stir for an additional 7 minutes.

Preparation of Films for Extraction

The above emulsion was poured into a shallow, glass baking dish until the bottom was covered with about $\frac{1}{4}$" of the emulsion. The dish was placed in a vapor hood, and the liquid evaporated overnight. The dish was then placed in a vacuum oven and further dried for an additional 16 hours. This coating is used in the following extraction experiments. Portions of the coating film were extracted without post heat treatments while other portions of the coating film were heated for $\frac{1}{2}$ hour at 120° C and cooled to room temperature prior to extraction. The percent insolubles from these films are listed in TABLE I following, along with percent insolubles values determined for various coatings made by the process of this invention. From the data it is apparent that the crosslinked coatings of this invention indeed are highly crosslinked (%insolubles greater than 50%) whereas the coatings derived from the U.S. 4,331,717 invention are substantially linear and uncrosslinked in character.

TABLE I

| Polymer Coating from | Post Heat Treatment | % Insolubles Refluxing Methyl Ethyl Ketone |
|---|---|---|
| Example 5 | None | 84.8 |
| Example 5 | 90°C, ½ hour | 89.1 |
| Example 5 | 120°C, ½ hour | 89.6 |
| Example 5 | 150°C, ½ hour | 83.2 |
| Example 4 | None | 73.7 |
| Example 9 | None | 85.9 |
| Example 10 | None | 86.0 |
| Example 6 | None | 0 |
| Example 6 | 120°C ½ hour | 7.0 |

Example 7

Preparation of Concentrated Emulsion

To a 30-gallon jacketed reactor equipped with an agitator were charged 102.5 pounds of methyl ethyl ketone, 13.46 pounds of toluene diisocyanate (80-20 by weight mixture of 2,4-/2,6-isomers), 8.59 pounds of isophorone diisocyanate, 1.98 pounds of triethanolamine and 77.5 pounds of polypropylene glycol having a molecular weight of about 1,025. To this was added 0.0936 pounds of dibutyltin dilaurate, and the reaction was allowed to proceed for a total of 3 hours at a temperature of 45°C (113°F). When the isocyanate content reached about 0.16 milliequivalents per gram, 0.412 pounds of a cationic emulsifier, i.e., N,N-dimethyloctadecylamine, commercially available from Armak under the tradename "Armeen DM-18 D", was added to the reaction mixture. stirring was continued for 5 minutes, then the product was formed into an emulsion with 202 pounds of demineralized water and 1.08 pounds of 85% phosphoric acid by pumping the two liquids, each at a 2 pounds per minute feed rate, through a 10 gpm recirculating Tekmar emulsifier, into a recirculating hold tank with a 10-minute residence time and then into a 55-gallon drum for storage. The total emulsification process required about 100 minutes for all the material. During emulsification, foaming ($CO_2$ evolution) took place, subsiding considerably after about 2 minutes. The resultant emulsion was about 25% solids.

All of the resultant emulsion was concentrated by removal of all methyl ethyl ketone and a portion of the water in two passes through a Kontro thin-film evaporator, Model No. R-55-3H-1, under conditions as follows:

Feed rate- 52 - 56 lbs/in/ft$^2$, both passes
Feed temperature - 70°F, both passes
Jacket temperature - 150°F, both passes
Rotor speed - 850 RPM, both passes
Operating pressure - 50 Torr, first pass
 - about 25 Torr, second pass
Bottom discharge temperature - 95°F, both passes

The concentrate solids content was about 60%.

## Example 8

To 100 parts of the emulsion of Example 7 having a solids content of 60% was added with stirring 0.5 part of a carbon black dispersion made by ball-milling overnight a mixture of. 288 parts of demineralized water, 57.6 parts of carbon black and 14.4 parts of a surfactant available commercially from the Atlas Company under the tradename of Atlas-4280. To the resulting pigmented emulsion was added after 5 minutes of stirring 0.002 part of 8-hydroxyquinoline and 0.15 part of a thixotropic agent; namely, a polyacrylamide commercially available from Dow Chemical under the tradename of Separan AP-273 with continued stirring. After 2 hours of stirring, the resultant thixotropic emulsion had a viscosity of 4.37 poise and a yield-stress value of 780 dynes /$cm^2$ as measured on a Contraves Rheomat 115 viscometer at 20°C and a shear rate of 350 $min.^{-1}$.

The emulsion was sprayed using commercial equipment onto steel panels electrocoated with a composition available commercially from PPG Industries Inc. under the tradename ED-3150. The coated panels dried tack-free after 1 hour at ambient temperature to coatings that were 0.018" thick. The panels were subjected to the shot blaster test in both the dry and the wet states. In the dry state, the coating withstood shot blasting for 620 seconds, and in the wet state the coating withstood shot blasting for 383 seconds. These results show that emulsions of the instant invention with high solids content; i.e., about 60%, can be made thixotropic with a minimum amount of a thixotropic agent and that coatings made from such thixotropic emulsions have good abrasion resistance.

## Example 9

### Preparation of Emulsion With All-Aromatic Isocyanate

To a stirred, 3-necked, round-bottomed, 5-liter flask were charged 1,196 g methyl ethyl ketone, 778.7 g polypropylene glycol having a molecular weight of 1,000, 12.1 g triethanolamine, 187.6 g toluene diisocyanate (80-20 by weight mixture of 2,4-/2,6-isomers) and 0.7 g dibutyltin dilaurate. The temperature was raised to 45° C by means of an electric heating mantle and maintained at that temperature for about 220 minutes until the isocyanate content reached 0.16 milliequivalents per gram. To the solution was added 3.9% of N,N-dimethyloctadecyl amine and the admixture was stirred for 1 minute before emulsification.

Into a 1-gallon Waring Blendor were charged 1,050 g of demineralized water and 3.5 g of 85% phosphoric acid. With the Blendor running, 1,050 g of the polymer solution was poured into the acidified water and stirring was maintained for seven minutes. The pH of the resulting emulsion was 2.6, and the solids content was 22.5%. The emulsion was concentrated to 63% solids on a rotary evaporator and drawn down into coatings on electrocoated panels in the manner described in Example 4. In the dry shot blasting test, a coating, 0.193$\frac{1}{4}$ thick, lasted 2,150 seconds before bare metal appeared and, in the wet shot blasting test, a sample, 0.020" thick, lasted 424 seconds before bare metal appeared. A coated panel with a coating thickness of 0.017" was subjected to a Gravelometer abrasion test, after being exposed to conditions of 100% relative humidity and 100° F for 24 hours in accord with SAE J-400 with 5 pints of gravel. The thus abraded panel was then placed in a salt fog chamber (a Singleton SCCH Corrosion Test Cabinet, manufactured by the Singleton Corp., Cleveland, Ohio). The Salt Spray (Fog) Test was run in accord with the procedure of ASTM B117-73. The cabinet contained a salt solution of 5 parts by weight NaCl in 95 parts distilled water and was maintained in the exposure zone at a temperature in the range 33.3 - 36.1° C. The exposure time in the cabinet was 48 hours. On examination of the panel for rust spots, none was found.

## Example 10

To a stirred, 3-necked, round-bottomed flask was charged 1,200 g of methyl ethyl ketone, 878 g of polypropylene glycol having a molecular weight of about 980, 100.0 g of isophorone diisocyanate, 156.7 g of toluene diisocyanate (80 - 20 by weight mixture of 2,4-/2,6-isomers), 20.1 g of trimethylolpropane and 1.1 g of dibutyltin dilaurate. Following the initial exothermic reaction, the temperature was maintained at about 50° C until the NCO content reached 0.20 meq/g (theoretical NCO content is 0.19 meq/g).

To 600 g of the resulting polymer solution was added 1.2 g of N,N-dimethyl octadecyl amine, commercially available from Armak under the tradename "Armeen DM-18D". A solution of 0.88 g of 85% phosphoric acid in 600 g of water was charged to a 1-gallon Waring Blendor and stirred at medium speed while the polymer solution was added over a period of 20 seconds. The resulting emulsion was allowed to stand overnight and was found to have a pH of 3.35. The average particle size was 1.8 microns.The emulsion was concentrated in a

rotary evaporator to 60% solids, and the resulting concentrated emulsion had pH 3.10.

It was coated onto steel panels electrocoated with a composition commercially available from PPG Industries, Inc. under the tradename "ED-3150-A". The thus coated panels dried tack-free after 3 hours at room temperature. The panels were then subjected to the shot blaster abrasion test in the same manner as in Example 4. A coating, 0.0125 inches in thickness, required 1,576 seconds for split steel shot to penetrate the coating. After the panel was soaked 16 hours in deionized water and retested immediately after removal from the water, 448 seconds were required for the shot to penetrate. In a similar fashion a panel, 0.0165 inches in thickness, required 2,386 seconds for penetration when dry and 1,484 seconds when tested wet after soaking for 16 hours.

## Example 11

The resultant emulsion similar to that used in Example 10 was concentrated to a solids content of 71%. The resultant concentrated emulsion had viscosity at 25°C of 1.3 poise. A portion of emulsion was concentrated to a solids content of 74.6%, and the resultant emulsion had viscosity at 25°C of 4.70 poise.

## Example 12

### Prepolymer Preparation

To a stirred, 3-necked, round bottom, 5-liter flask are charged 1,970.1 g methyl ethyl ketone, 391.5 g toluene diisocyanate (80-20 by weight mixture of 2,4-/2,6-isomers), 37.2 g of triethanolamine and 1,505.4 g of polypropylene glycol having a molecular weight of about 1,025. The reactants are stirred for about 3 hours at which time the exotherm (up to 46°C) begins to subside. 1.8 g of dibutyltindilaurate are added to the reaction. to force the reaction to completion. The final NCO content was 0.18 meq/g (theoretical NCO is 0.22 meq/g).

## Example 13

### Emulsion Preparation

Into a 1-gallon Waring Blendor are charged 600 g demineralized water containing 3.6 g of phosphoric acid (85%).

Into another container are combined 600 g of the reaction mixture from Example 12 along with 1.2 g of an emulsifier, i.e., N,N-dimethyloctadecylamine, commercially available from Armak under the tradename "Armeen DM-18D". The admixture was stirred for about 1 minute to obtain a homogeneous admixture. The thus emulsifier-containing prepolymer solution was then charged to the phosphoric acid containing water with high speed stirring and the reaction was continued for about 7 minutes. The emulsifier on neutralization by the opposing counter ion (e.g., phosphoric acid) becomes a cationic surfactant. During the reaction copious foaming ($CO_2$ evolution) took place which subsided considerably after about 1 hour. The resultant emulsion was about 25% solids.

## Example 14

### Emulsion Concentration

The resultant emulsion from Example 13 was concentrated using a Buechi Rotavapor R connected to house vacuum and heated occasionally (usually less than 35°C) using a water bath. In this manner about 4 hours were required to strip enough liquid to produce an emulsion with a solids content of about 60 wt.%.

## Example 15

Polymer Preparation

A polymer solution was prepared as in Example 12, using 1,160 g methyl ethyl ketone, 725.1 g polypropylene glycol with molecular weight of about 1,025, 187.7 g of toluene diisocyanate, 16.1 g of trimethylolpropane and 0.7 g of dibutyltin dilaurate. After 6 hours at 45°C, the isocyanate content was 0.16 meq/g.

Example 16

Emulsification

To the product of Example 15 was added 3.2 g of N,N-dimethyloctadecylamine, and it was emulsified in three ways to determine the values of pH, and average particle size may be obtained under varying conditions.

To a solution of 0.88 g of 85% phosphoric acid in 600 g of demineralized water in a 1-gallon Waring Blendor was added 600 g of the polymer solution. After 7 minutes in the Waring Blendor, the resulting stable emulsion had pH 2.90 and average particle size of 2.8 micrometers.

To a solution of 0.64 g of methanesulfonic acid in 600 g of demineralized water in a 1-gallon Waring Blendor was added a second 600 g portion of the polymer solution. After 7 minutes in the Waring Blendor, the resulting stable emulsion had pH 2.7 and an average particle size of 3.7 micrometers.

To a solution of 1.2 g of 85% phosphoric acid in 600 g of demineralized water in a 1-gallon Waring Blendor was added a third 600 g portion of the polymer solution. After 7 minutes in the Waring Blendor, the resulting stable emulsion had pH 2.65 and an average particle size of 3.2 micrometers.

Example 17

Polymer Preparation

A polymer solution was prepared in a manner similar to that of Example 10, using 1,143 g methyl ethyl ketone, 731 g polypropylene glycol with molecular weight of about 1,025, 16.1 g trimethylolpropane, 80 g isophorone diisocyanate, 125.4 g toluenediisocyanate, and 0.7 g dibutyltin dilaurate. When the isocyanate content reached 0.16 meq/g, the polymer solution was emulsified.

Example 18

Emulsification

To the product of Example 17 were added 3.2 g of N,N-dimethyloctadecylamine, and it was emulsified in two different ways.

To a solution of 0.88 g 85% phosphoric acid in 600 g demineralized water in a 1-gallon Waring Blendor was added 600 g of the polymer solution. After 7 minutes in the Waring Blendor, the resulting stable emulsion had pH 3.6 and an average particle size of 1.3 micrometers. It was concentrated to 60% solids in a rotary evaporator and tested for wet abrasion resistance in a drawn-down coating as in Example 10. A coating, 0.0147" thick, required 200 seconds for the shot to penetrate after being soaked 16 hours in water.

Another 600 g portion of the polymer solution was emulsified by adding to a solution of 0.75 g of methanesulfonic acid in 600 g of demineralized water in a 1-gallon Waring Blendor. The resulting stable emulsion had pH 2.75 and average particle size of 1.7 micrometers. The emulsion was concentrated to 67% solids in a rotary evaporator and tested for wet abrasion resistance. A coating, 0.0159" thick, required 755 seconds for the shot to penetrate and bare metal to be exposed after being soaked 16 hours in water.

Example 19

Resistance of Coating to Heat

The emulsion product of Example 7 was drawn down into a coating that was 0.0127" thick, in the same

manner as was explained in Example 4. After it had been air dried at ambient temperature, it was subjected to a heat cycle similar to that used in paint ovens in order to find out whether its resistance to shot blasting in the wet state would remain at a satisfactory level. The panel was heated at 100° C for 15 minutes and then at 160° C for 20 minutes. The resistance to shot blasting in the wet state was found to be essentially the same as for similar test panels made from the same emulsion that had been air dried but not heated.

Example 20

A polymer solution was prepared as in Example 12, using 1,240 g methyl ethyl ketone, 761.1 g polypropylene glycol with molecular weight about 1,025, 240 g isophorone diisocyanate, 12.9 g trimethylolpropane and 1.1 dibutyltin dilaurate. After 11 hours at 50° C, the isocyanate content was 0.14 meq/g.

To the product was added 3.2 g N,N-dimethyloctadecylamine, and it was emulsified in a 1-gallon Waring Blendor using 1,200 g of the polymer solution and 1,200 g of demineralized water acidified with 1.28 g of methanesulfonic acid. The resulting stable emulsion had pH 2.6 and was concentrated to 68% solids on a rotary evaporator. The concentrate was coated onto panels, dried overnight at ambient conditions and subjected to the shot blasting test for abrasion resistance. A coating, 0.0128" thick, survived shot blasting for 200 seconds in the wet condition.

**Claims**

1. A storage stable, aqueous emulsion of crosslinked polyurethane particles having an average particle size in the range 1-5 microns in diameter and capable of forming water-resistant plastic coatings without heating prepared by

(1) forming in an inert solvent a branched prepolymer with at least 0.4% (0.095 meq/g) of free isocyanate from
(a) an alcohol having two or three hydroxyl groups,
(b) a hydrophobic polymeric diol or triol, and
(c) a polyisocyanate,
the mole ratio of (a):(b):(c) being 1:4-15:7-18, preferably 1:6-9:9-12, respectively, and the amounts of (a), (b) and (c) being such that the equivalent ratio of total isocyanate to total hydroxyl is less than 1.4;

(2) admixing the reaction products from (1) supra with a fatty, tertiary amine additive with molecular weight of less than 1,000 in an amount up to 1% by weight of the prepolymer in (1) supra;

(3) adding the mixture from (2) with vigorous stirring to water acidified to pH 1.5 - 5.0 with an inorganic or a non-carboxylic acid that retains its acidic character up to 200° C, to form a crosslinked polyurethane emulsion; and

(4) removing the inert solvent and a portion of the water so that the emulsion contains about 60 to 75 % solids but less than 1% of residual acid.

2. The emulsion according to Claim 1 wherein(a) is a member of the group consisting of triethanolamine, trimethylolpropane, glycerol, tripropanolamine, 1-[N,N-bis(2-hydroxyethyl)amino]-2-propanol, N-methyl diethanolamine and trimethylolethane,(b) is polypropylene glycol and(c) is a mixture of aromatic and cycloaliphatic polyisocyanates, preferably a mixture of toluene diisocyanate and isophorone diisocyanate.

3. The emulsion according to Claim 1 wherein (a) is a member of the group consisting of triethanolamine, trimethylolpropane, glycerol, tripropanolamine, 1-[N,N-bis(2-hydroxyethyl)amino]-2-propanol, N-methyl diethanolamine and trimethylolethane, (b) is polypropylene glycol and (c) is an aromatic diisocyanate, preferably toluene diisocyanate.

4. The emulsion according to Claim 1 wherein (a) is a member of the group consisting of N-methyldiethanolamine or N-methyldipropanolamine or mixtures thereof.

5. A process for forming a coating on a substrate which comprises coating said substrate with an emulsion according to any of claims 1 to 4 and drying said emulsion at ambient conditions for a time sufficient to obtain a cured coating.

6. A process of forming a coating on a substrate which comprises coating said substrate with an emulsion according to any of Claims 1 to 4 and, thereafter, heating the resultant coating to a temperature in the range of about 30 to about 160° C for a time sufficient to obtain a cured doating.

7. The process of Claim 5 or 6 wherein an automotive underbody coating, a chip-resistant automotive side sill coating or a wash-resistant automotive cavity conservation coating is prepared.

8. The process according to any of claims 5 to 7 wherein the emulsion contains at least one of the functional additives selected from the group consisting of antioxidants, UV stabilizers, corrosion inhibitors, antiblistering agents, thixotropic agents and coloring agents.

9. The process according to Claim 1 wherein step (1) is carried out in the presence of a urethane forming catalyst.

10. A process of forming a storage stable, aqueous emulsion of crosslinked polyurethane particles having an average particle size in the range 1-5 microns in diameter which comprises

(1) reacting in an inert solvent

(a) an alcohol having two or three hydroxyl groups,

(b) a hydrophobic polymeric diol or triol, and

(c) a polyisocyanate,

the mole ratio of (a):(b):(c) being 1:4-15:7-18, preferably 1:6-9:9-12, respectively, and the amounts of (a), (b) and (c) being such that the equivalent ratio of total isocyanate to total hydroxyl is less than 1.4;

(2) admixing the reaction products from (1) supra with a fatty, tertiary amine additive with molecular weight of less than 1,000 in an amount up to 1% by weight of the prepolymer in (1) supra;

(3) adding the mixture from (2) with vigorous stirring to water acidified to pH 1.5 - 5.0 with an inorganic or a non-carboxylic acid that retains its acidic character up to 200° C, to form a crosslinked polyurethane emulsion.

11. The process according to Claim 10 wherein step (1) is carried out in the presence of a urethane-forming catalyst.

12. The process according to Claim 10 or 11 wherein the inert solvent and a portion of the water is removed so that the emulsion contains 60-75% solids.

13. An isocyanate terminated, branched prepolymer for use in making a crosslinked polyurethane aqueous emulsion which comprises the reaction product in an inert solvent of

(a) an alcohol having two or three hydroxyl groups,

(b) a hydrophobic polymeric diol or triol, and

(c) a polyisocyanate,

the mole ratio of (a):(b):(c) being 1:4-15:7-18, preferably 1:6-9:9-12, respectively, and the amounts of (a), (b) and (c) being such that the equivalent ratio of total isocyanate to total hydroxyl is less than 1.4.

14. The emulsion according to Claim 1 wherein

(a) is trimethylolpropane or triethanolamine,

(b) is polypropylene glycol, and

(c) is isophorone diisocyanate.